# EUROPEAN PATENT APPLICATION

(11) **EP 4 797 740 A1**
(43) Date of publication of application: **26.08.2026**
(21) Application number: 23956307.5
(22) Date of filing: 23.10.2023
(51) Int. Cl.: H04W 4/50

(54) **METHOD FOR PROVIDING NETWORK SERVICE, AND APPARATUS AND SYSTEM**

(71) Applicant: HUAWEI TECHNOLOGIES CO., LTD., Shenzhen 518129 (CN)
(72) Inventor: WANG, Fei, Shenzhen, Guangdong 518129 (CN); PENG, Chenghui, Shenzhen, Guangdong 518129 (CN); HUANG, Huanhuan, Shenzhen, Guangdong 518129 (CN); LIU, Zhe, Shenzhen, Guangdong 518129 (CN)
(74) Representative: Epping - Hermann - Fischer
(86) International application number: PCT/CN2023/125985
(87) International publication number: WO 2025/086050

(57) **Abstract**

This application provides a method for providing a network service, a communication apparatus, and a communication system. The method includes: receiving information about a first server-side application, where the first server-side application is used to provide a network service for a first terminal device, and the first server-side application is from a third-party system; and loading the first server-side application, where a first node is a core network element or a radio access network device. The first node can provide a network service that is based on the first server-side application for a user **in** a mobile network environment, to improve quality of providing services for users.

## Description

### TECHNICAL FIELD

Embodiments of this application relate to the field of wireless communication technologies, and more specifically, to a method for providing a network service, an apparatus, and a system.

### BACKGROUND

Currently, more third-party systems choose to provide services for users by using cloud servers. Cloud server providers may provide computation, storage, and other resources for the cloud servers, so that the cloud servers can use the resources to provide the services for the users. However, computation, storage, and other resources that can be provided by the cloud server providers are limited. As applications developed by the third-party systems become more complex, and application environments become more changeable, the cloud servers cannot meet quality requirements of providing the services for the users.

### SUMMARY

This application provides a method for providing a network service, a communication apparatus, and a communication system, to improve quality of providing services for users.

According to a first aspect, a method for providing a network service is provided. The method is applied to a first node, or may be applied to a chip, a chip system, a hardware circuit, a software module, a combination of a hardware circuit and a software module, or the like installed in the first node. The following uses the first node as an example for description. The method includes: receiving information about a first server-side application, where the first server-side application is used to provide a network service for a first terminal device, and the first server-side application is from a third-party system; and loading the first server-side application, where the first node is a core network element or a radio access network device.

Based on this technical solution, the first node supports the third-party system in deploying the first server-side application on the first node, the first node is inside a mobile network, and the first node loads the first server-side application, so that the first node can provide a network service that is based on the first server-side application for a user in a network environment, to improve quality of providing services for users.

With reference to the first aspect, in some implementations, the method further includes: obtaining at least one of network data and a network resource; and executing the first server-side application based on at least one of the network data and the network resource.

Based on this technical solution, the first node may obtain at least one of the network data and the network resource, to execute the first server-side application. For example, the first node may obtain the network data to perform algorithm adjustment on the first server-side application. For another example, the first node may invoke a computational power resource in a network to execute the first server-side application. The first node is inside the mobile network, and may obtain the network data and invoke the network resource without interacting with the outside of the mobile network, that is, can flexibly obtain the network data and the network resource in a timely manner, to further improve the quality of providing the services for the users.

With reference to the first aspect, in some implementations, the network data is obtained based on one or more of the following information: type information of network data needed by the first server-side application, data amount information of the network data needed by the first server-side application, information about an area in which the first server-side application provides a network service, location information of the first node, location information of the first terminal device, or identification information of the first terminal device.

Based on this technical solution, the first node may obtain the network data based on various information related to the first server-side application, and execute the first server-side application based on the network data, to further improve the quality of providing the services for the users.

With reference to the first aspect, in some implementations, the network resource is obtained based on one or more of the following information: type information of a network resource needed by the first server-side application, resource quantity information of the network resource needed by the first server-side application, the information about the area in which the first server-side application provides the network service, the location information of the first node, the location information of the first terminal device, or the identification information of the first terminal device.

Based on this technical solution, the first node may obtain the network resource based on various information related to the first server-side application, and execute the first server-side application based on the network resource, to further improve the quality of providing the services for the users.

With reference to the first aspect, in some implementations, the first terminal device is a terminal device that establishes, with the first node, a session that is based on the first server-side application.

Based on this technical solution, the first node and the first terminal device establish the session that is based on the first server-side application. The first node may obtain, in a timely manner by using an advantage of being inside the mobile network, the network data and the network resource that are related to the first terminal device, and provide the network service for the first terminal device, to improve the quality of providing the services for the users.

With reference to the first aspect, in some implementations, the receiving the information about the first server-side application includes: receiving a first message, where the first message is used to request to load the first server-side application, and the third message includes the information about the first server-side application.

Based on this technical solution, the first node may load the first server-side application based on the first message used to request to load the first server-side application.

With reference to the first aspect, in some implementations, the first message further includes identification information of the first server-side application.

Based on this technical solution, the first node may further establish a mapping relationship between the first server-side application and the identification information of the first server-side application, so that the first server-side application can be subsequently executed based on the identification information. Therefore, in this technical solution, the network service that is based on the first server-side application can be flexibly improved for the user, and quality of providing the network service for the user is improved.

With reference to the first aspect, in some implementations, the method further includes: sending a second message, where the second message is used to notify a loading result of the first server-side application, and the second message includes one or more of the following: identification information of a first task, identification information of the first node, or the location information of the first node.

Based on this technical solution, the first node may feed back the loading result of the first server-side application, for example, feed back the loading result to a second node configured to manage the first node, so that the second node can provide a better management service.

With reference to the first aspect, in some implementations, the obtaining the network data includes: sending a third message, where the third message is used to request the network data; and receiving the network data responding to the third message.

Based on this technical solution, the first node is inside the mobile network, and may provide, for the first server-side application, an interface agent service used to obtain the network data. The first server-side application may flexibly obtain the network data from the network by using the interface agent service provided by the first node, and may not interact with the outside of the mobile network, to improve the quality of providing the network service for the user.

With reference to the first aspect, in some implementations, the method further includes: sending a fourth message, where the fourth message is used to request to execute the first task, and the first task is generated based on the first server-side application; and receiving an execution result of the first task.

Based on this technical solution, the first node is inside the mobile network, and may request the mobile network to internally assist in executing the first task, to improve the quality of providing the network service for the user.

With reference to the first aspect, in some implementations, the method further includes: sending a fifth message, where the fifth message is used for registration of the first node, and the fifth message includes one or more of the following: the location information of the first node, the identification information of the first node, or capability information of the first node for providing a network service.

Based on this technical solution, the first node completes registration by using the fifth message. For example, the first node may be registered with the second node. In other words, the second node may manage at least one node by using a registration procedure, and may further select, for the first server-side application based on information included in the fifth message, an appropriate node used for deployment, so that the quality of providing the network service for the user can be improved.

With reference to the first aspect, in some implementations, the method further includes: sending a sixth message, where the sixth message indicates a capability change of the first node for providing the network service.

Based on this technical solution, the first node may notify, by using the fifth message, the capability change of the first node. For example, the first node may notify, by using the fifth message, the second node of a computational power capability change of the first node. Therefore, the second node may provide a management service based on the sixth message, to further improve the quality of providing the network service for the user.

With reference to the first aspect, in some implementations, the method further includes: receiving or sending a data packet that is associated with the first server-side application and that is from the first terminal device.

Based on this technical solution, the first node may exchange the data packet that is based on the first server-side application with the first terminal device. In other words, the first server-side application may exchange data with the user via the first node, and the third-party system may not participate in data packet exchange, so that communication security and privacy of the user can be ensured.

With reference to the first aspect, in some implementations, the data packet includes the identification information of the first server-side application.

Based on this technical solution, the first node and the first terminal device may route the data packet based on the identification information of the first server-side application, to ensure reliable transmission of the data packet and improve reliability of providing the network service for the user.

According to a second aspect, a method for providing a network service is provided. The method is applied to a second node, or may be applied to a chip, a chip system, a hardware circuit, a software module, a combination of a hardware circuit and a software module, or the like installed in the second node. The following uses the second node as an example for description. The method includes: sending information about a first server-side application to a first node, where the first server-side application is used to provide a network service for a first terminal device, and the first server-side application is from a third-party system; and the second node is configured to manage the first node, the first node is a core network element or a radio access network device, and the first node is configured to load the first server-side application.

Some implementations of the second aspect are implementations corresponding to some implementations of the first aspect. For beneficial technical effects of some implementations of the second aspect, refer to the descriptions of related implementations of the first aspect. Details are not described herein again.

With reference to the second aspect, in some implementations, the method further includes: receiving a seventh message, where the seventh message is used to request to deploy the first server-side application, the seventh message includes the first server-side application and requirement information of the first server-side application, and the requirement information of the first server-side application indicates one or more of the following: type information of network data needed by the first server-side application, data amount information of the network data needed by the first server-side application, type information of a network resource needed by the first server-side application, resource quantity information needed by the first server-side application, or information about an area in which the first server-side application provides a network service.

Based on this technical solution, the second node may obtain the requirement information of the first server-side application by using the seventh message, and provide a management service of the first server-side application based on the requirement information, to improve quality of providing the network service for a user.

With reference to the second aspect, in some implementations, the method further includes: determining the first node based on the seventh message.

With reference to the second aspect, in some implementations, the sending the information about the first server-side application to the first node includes: sending a first message to the first node, where the first message is used to request to load the first server-side application, and the first message includes the information about the first server-side application.

With reference to the second aspect, in some implementations, the first message further includes identification information of the first server-side application.

With reference to the second aspect, in some implementations, the method further includes: receiving a second message, where the second message is used to notify a loading result of the first server-side application, and the second message includes one or more of the following: the identification information of the first server-side application, identification information of the first node, or location information of the first node.

With reference to the second aspect, in some implementations, the method further includes: receiving a fifth message, where the fifth message is used for registration of the first node, and the fifth message includes one or more of the following: the location information of the first node, the identification information of the first node, or capability information of the first node for providing a network service.

With reference to the second aspect, in some implementations, the method further includes: receiving a sixth message, where the sixth message indicates a capability change of the first node for providing the network service.

With reference to the second aspect, in some implementations, the method further includes: receiving an eighth message from the first terminal device, where the eighth message is used to request to establish a session between the first terminal device and the first node; and establishing the session between the first terminal device and the first node.

Based on this technical solution, the second node may establish the session between the first terminal device and the first node, so that data transmission can be implemented between the first terminal device and the first node based on the session.

With reference to the second aspect, in some implementations, the eighth message includes one or more of the following: the identification information of the first server-side application, the location information of the first node, or the identification information of the first node.

Based on this technical solution, the second node may establish the session based on any one or more of the identification information of the first server-side application, the location information of the first node, or the identification information of the first node, so that the data packet can be routed between the first node and the first terminal device based on the foregoing information, to ensure reliable transmission of the data packet and improve reliability of providing the network service for the user.

According to a third aspect, a method for providing a network service is provided. The method is applied to a first terminal device, or may be applied to a chip, a chip system, a hardware circuit, a software module, a combination of a hardware circuit and a software module, or the like installed in the first terminal device. The following uses the first terminal device as an example for description. The method includes: sending an eighth message, where the eighth message is used to request to establish a first session between the first terminal device and a first node; and performing, with the first node via the first session, transmission of a data packet associated with a first server-side application, where the first node is a core network element or a radio access network device, the first server-side application is from a third-party system, and the first node is configured to load the first server-side application.

Some implementations of the third aspect are implementations corresponding to some implementations of the first aspect and the second aspect. For beneficial technical effects of some implementations of the third aspect, refer to the descriptions of related implementations of the first aspect and the second aspect. Details are not described herein again.

With reference to the third aspect, in some implementations, the eighth message includes one or more of the following: identification information of the first server-side application, identification information of the first node, or location information of the first node.

With reference to the third aspect, in some implementations, the method further includes: receiving a ninth message, where the ninth message indicates a route selection policy rule of the first server-side application, and the ninth message includes one or more of the following: the identification information of the first server-side application, the identification information of the first node, or the location information of the first node.

Based on this technical solution, the first terminal device may request, based on the route selection policy rule, to establish a session between the first terminal device and the first node, to route the data packet, ensure reliable transmission of the data packet, and improve reliability of providing a network service for a user.

According to a fourth aspect, a method for providing a network service is provided. The method is applied to a communication system, the communication system includes a first node and a second node, the first node is a core network element or a radio access network device, and the second node is configured to manage the first node. The method includes: The second node sends information about a first server-side application to the first node, where the first server-side application is used to provide a network service for a first terminal device, and the first server-side application is from a third-party system; and the first node loads the first server-side application.

Some implementations of the fourth aspect are implementations corresponding to some implementations of the first aspect to the third aspect. For some implementations of the fourth aspect and beneficial technical effects of some implementations, refer to the descriptions of related implementations of the first aspect to the third aspect. Details are not described herein again.

According to a fifth aspect, a communication method is provided. The method is applied to a first node, or may be applied to a chip, a chip system, a hardware circuit, a software module, a combination of a hardware circuit and a software module, or the like installed in the first node. The following uses the first node as an example for description. The method includes: obtaining at least one of network data and a network resource; and executing, based on the network data and the network resource, a first server-side application deployed on the first node, where the first node is a core network element or a radio access network device, and the first server-side application is from a third-party system.

Based on this technical solution, the first node may obtain at least one of the network data and the network resource, to execute the first server-side application. For example, the first node may obtain the network data to perform algorithm adjustment on the first server-side application. For another example, the first node may invoke a computational power resource in a network to execute the first server-side application. The first server-side application is deployed on the first node. The first node is inside a mobile network, and may obtain the network data and invoke the network resource without interacting with the outside of the mobile network, that is, can flexibly obtain the network data or the network resource in a timely manner, to improve quality of providing services for users.

According to a sixth aspect, a communication method is provided. The method is applied to a second node, or may be applied to a chip, a chip system, a hardware circuit, a software module, a combination of a hardware circuit and a software module, or the like installed in the second node. The following uses the second node as an example for description. The method includes: receiving an eighth message, where the eighth message is used to request to establish a session between a first terminal device and a first node, and the session is used to transmit a data packet associated with a first server-side application; and establishing the session between the first terminal device and the first node based on the eighth message.

Based on this technical solution, the second node may establish the session based on any one or more of identification information of the first server-side application, location information of the first node, or identification information of the first node, so that the data packet can be routed between the first node and the first terminal device based on the foregoing information, to ensure reliable transmission of the data packet and improve reliability of providing a network service for a user.

With reference to the sixth aspect, in some implementations, the eighth message includes one or more of the following: the identification information of the first server-side application, the location information of the first node, or the identification information of the first node.

According to a seventh aspect, a communication apparatus is provided. The communication apparatus includes a transceiver unit and a processing unit. The transceiver unit is configured to receive information about a first server-side application, where the first server-side application is used to provide a network service for a first terminal device, and the first server-side application is from a third-party system. The processing unit is configured to load the first server-side application, where the communication apparatus is a core network element or a radio access network device.

Implementations of the seventh aspect correspond to the implementations of the first aspect. For the implementations of the seventh aspect and beneficial technical effects of the implementations, refer to the descriptions of the implementations of the first aspect. Details are not described herein again.

According to an eighth aspect, a communication apparatus is provided. The communication apparatus includes a transceiver unit and a processing unit. The processing unit is configured to obtain information about a first server-side application. The transceiver unit is configured to send the information about the first server-side application to a first node, where the first server-side application is used to provide a network service for a first terminal device, and the first server-side application is from a third-party system; and the communication apparatus is configured to manage the first node, the first node is a core network element or a radio access network device, and the first node is configured to load the first server-side application.

Implementations of the eighth aspect correspond to the implementations of the second aspect. For the implementations of the eighth aspect and beneficial technical effects of the implementations, refer to the descriptions of the implementations of the second aspect. Details are not described herein again.

According to a ninth aspect, a communication apparatus is provided. The communication apparatus includes a transceiver unit and a processing unit. The transceiver unit is configured to generate an eighth message. The transceiver unit is configured to send the eighth message, where the eighth message is used to request to establish a first session between the communication apparatus and a first node. The transceiver unit is further configured to perform, with the first node via the first session, transmission of a data packet associated with a first server-side application, where the first node is a core network element or a radio access network device, the first server-side application is from a third-party system, and the first node is configured to load the first server-side application.

Implementations of the ninth aspect correspond to the implementations of the third aspect. For the implementations of the ninth aspect and beneficial technical effects of the implementations, refer to the descriptions of the implementations of the third aspect. Details are not described herein again.

According to a tenth aspect, a communication apparatus is provided. The communication apparatus includes a transceiver unit and a processing unit. The transceiver unit is configured to obtain at least one of network data and a network resource. The processing unit is configured to execute, based on at least one of the network data and the network resource, a first server-side application deployed on the communication apparatus, where the communication apparatus is a core network element or a radio access network device, and the first server-side application is from a third-party system.

Implementations of the tenth aspect correspond to the implementations of the fifth aspect. For the implementations of the tenth aspect and beneficial technical effects of the implementations, refer to the descriptions of the implementations of the tenth aspect. Details are not described herein again.

According to an eleventh aspect, a communication apparatus is provided. The communication apparatus includes a transceiver unit and a processing unit. The transceiver unit is configured to receive an eighth message, where the eighth message is used to request to establish a session between a first terminal device and a first node, and the session is used to transmit a data packet related to a first server-side application. The processing unit is configured to establish the session between the first terminal device and the first node based on the eighth message.

Implementations of the eleventh aspect correspond to the implementations of the sixth aspect. For the implementations of the eleventh aspect and beneficial technical effects of the implementations, refer to the descriptions of the implementations of the sixth aspect. Details are not described herein again.

According to a twelfth aspect, a communication apparatus is provided. The communication apparatus has a function of implementing the method according to any one of the first aspect to the sixth aspect or the possible implementations of the first aspect to the sixth aspect. The function may be implemented by hardware, or may be implemented by hardware executing corresponding software. The hardware or the software includes one or more units or modules corresponding to the function.

According to a thirteenth aspect, a communication apparatus is provided, including at least one processor. The at least one processor is coupled to at least one memory, and the at least one processor is configured to execute a computer program or instructions stored in the at least one memory, so that the communication apparatus performs the method according to any one of the first aspect to the sixth aspect or any implementation of any aspect.

According to a fourteenth aspect, a communication apparatus is provided, including a processor and a communication interface. The communication interface is configured to receive data and/or information, and transmit the received data and/or information to the processor. The processor processes the data and/or information; and the communication interface is further configured to output data and/or information that are/is obtained after processing by the processor, so that the method according to any one of the first aspect to the sixth aspect or any implementation of any aspect is performed.

According to a fifteenth aspect, a computer-readable storage medium is provided. The computer-readable storage medium stores computer instructions, and when the computer instructions are run on a computer, the method according to any one of the first aspect to the sixth aspect or any possible implementation of any one of these aspects is performed.

According to a sixteenth aspect, a computer program product is provided. The computer program product includes computer program code, and when the computer program code is run on a computer, the method according to any one of the first aspect to the sixth aspect or any possible implementation of any one of these aspects is performed.

According to a seventeenth aspect, a communication system is provided, including a communication apparatus for performing the method according to any one of the first aspect to the third aspect.

According to an eighteenth aspect, a communication system is provided, including the communication apparatus according to any one or more of the seventh aspect to the sixteenth aspect, or the communication apparatus according to any possible implementation of any one of these aspects.

### BRIEF DESCRIPTION OF DRAWINGS

FIG. 1 is a diagram of a network architecture according to an embodiment of this application;
FIG. 2 is a diagram of a structure of a communication architecture in which a server-side application is deployed on a core network element according to an embodiment of this application;
FIG. 3 is a diagram of a structure of a communication architecture in which a server-side application is deployed on a TPF according to an embodiment of this application;
FIG. 4 is a diagram of a structure of a communication architecture in which a server-side application is deployed on a RAN according to an embodiment of this application;
FIG. 5 is another diagram of a structure of a communication architecture in which a server-side application is deployed on a RAN according to an embodiment of this application;
FIG. 6 is a diagram of a structure of a first node according to an embodiment of this application;
FIG. 7 is a schematic flowchart of a communication method 700 according to an embodiment of this application;
FIG. 8 is a schematic flowchart of a communication method 800 in which a second node is a core network element according to an embodiment of this application;
FIG. 9 is a schematic flowchart of a communication method 900 in which a second node is a core network element according to an embodiment of this application;
FIG. 10 is a schematic flowchart of a method 1000 for establishing a session between UE and a first node according to an embodiment of this application;
FIG. 11 is a schematic flowchart of a method for obtaining network data according to an embodiment of this application;
FIG. 12 is a schematic flowchart of a method for obtaining a computational power resource according to an embodiment of this application; and
FIG. 13 and FIG. 14 each are a diagram of a structure of a communication apparatus according to an embodiment of this application.

### DESCRIPTION OF EMBODIMENTS

The following describes technical solutions of this application with reference to the accompanying drawings.

The technical solutions in embodiments of this application may be applied to various communication systems, for example, a 5th generation (5th generation, 5G) or new radio (new radio, NR) system, a satellite communication system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions in embodiments of this application may be further applied to device to device (device to device, D2D) communication, vehicle-to-everything (vehicle-to-everything, V2X) communication, machine to machine (machine to machine, M2M) communication, machine type communication (machine type communication, MTC), industrial control, an intelligent transportation system (intelligent transportation system, ITS), mobile broadband, multimedia, and an internet of things (internet of things, IoT) communication system, or another communication system.

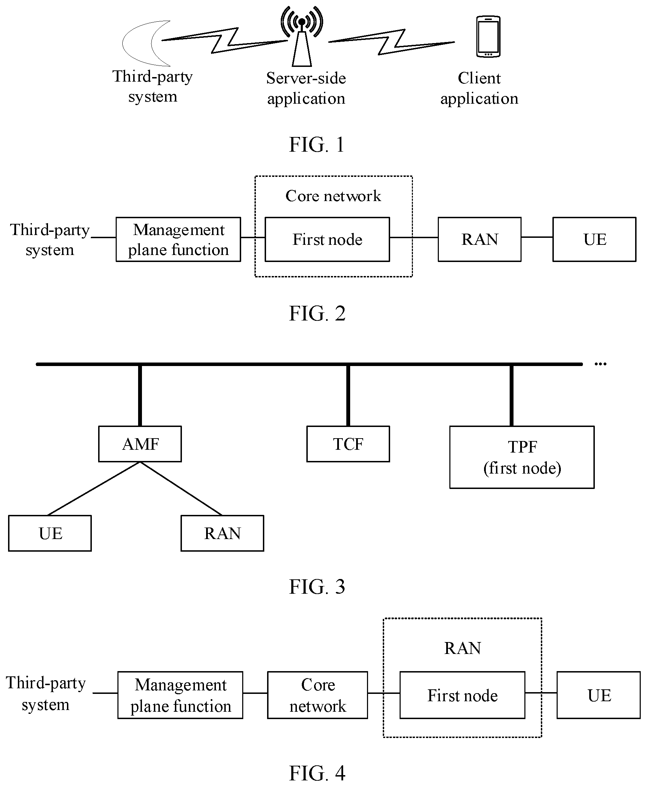

FIG. 1 is a diagram of a network architecture according to an embodiment of this application. As shown in FIG. 1, the network architecture may include but is not limited to the following: a client application and a server-side application.

### 1. Server-side application

The server-side application is an application program running inside a mobile network, and can be responsible for processing and responding to a request from a client, and provide a user with network services such as centralized computation, information processing, and data management. For example, the mobile network may be a network that complies with the 3rd generation partnership project (3^{rd} generation partnership project, 3GPP) specification or a mobile network specification defined in the future, for example, a public land mobile network (public land mobile network, PLMN).

For ease of description, in embodiments of this application, a device on which the server-side application is deployed is referred to as a first node. The first node may obtain a server-side application program file from a third-party system. The third-party system is a system outside the mobile network, for example, a local server or a cloud server of each developer (producer) factory. For example, the first node may obtain a program file from the internet providing various application services (over the top, OTT) for the user. The first node loads the program file, so that the program file exists in the first node, to implement deployment of the server-side application.

In embodiments of this application, the program file that is provided by the third-party system and that is deployed on the first node may be referred to as the server-side application, an application task net server (net server), a task, an application instance, or another possible name. This is not particularly limited in this application. For ease of description, embodiments of this application are described by using the server-side application as an example, but the server-side application may be replaced with any one of the foregoing names.

One or more server-side applications may be deployed on the first node. The plurality of server-side applications may be from a same third-party system or different third-party systems. This is not particularly limited in this application.

### 2. Client (client) application

The client application may also be referred to as an application (application, APP) briefly, and is an application program running inside user equipment (user equipment, UE). The client application is usually responsible for interacting with a user, displaying data and an interface, and communicating and interacting with a server-side application, to provide a network service for the user.

It may be understood that the server-side application (net server) in embodiments of this application may exist on the first node, and provide a network service for the user. For example, the first node may create a complete running environment for the server-side application. This feature is different from an existing general-purpose task. For example, for general-purpose tasks such as computation, data collection, or positioning, in these general-purpose tasks, services are usually not provided for the user based on a specific third-party system, and an execution body of the general-purpose tasks may provide an execution result in a dynamic deployment and execution manner. Embodiments of this application provide a solution in which the server-side application provided by the third-party system is deployed inside the network, the first node inside the network provides the user with a service that is based on the server-side application. Compared with a solution in which a device (for example, a device on which a cloud server is deployed) inside a non-mobile network provides the user with a service, the first node can flexibly use a resource in the network to provide the user with the service, to improve quality of service.

Based on different locations of the first node in the network, embodiments of this application are applicable to different communication architectures. In a first possible implementation, the first node may be a core network element, for example, a task process function (task process function, TPF). In a second possible implementation, the first node may be a radio access network (radio access network, RAN) device.

For ease of understanding embodiments of this application, the following describes the two implementations with reference to FIG. 2 to FIG. 5.

FIG. 2 is a diagram of a structure of a communication architecture in which a server-side application is deployed on a core network element according to an embodiment of this application. As shown in FIG. 2, the communication architecture includes:
1. Management plane function: can be responsible for communicating and interacting with a third-party system and a core network element. For example, the management plane function may include a network artificial intelligence management orchestration (network AI management orchestration, NAMO).
2. (Radio) access network ((radio) access network, (R)AN) device: may provide a function of accessing a communication network for an authorized user in a specific area. For ease of description, the following uses the AN device for representation.

The AN device may use different radio access technologies. Currently, there are two types of wireless access technologies: a 3GPP access technology (for example, a wireless access technology used in a 3rd generation (3rd generation, 3G) system, a 4th generation (4th generation, 4G) system, or a 5G system) and a non-3GPP (non-3GPP) access technology. The 3GPP access technology is an access technology that complies with a 3GPP standard specification. For example, an access network device in the 5G system is referred to as a next generation node base station (next generation Node Base station, gNB) or a RAN device. The non-3GPP access technology may include an air interface technology represented by an access point (access point, AP) in wireless fidelity (wireless fidelity, Wi-Fi), worldwide interoperability for microwave access (worldwide interoperability for microwave access, WiMAX), code division multiple access (code division multiple access, CDMA), or the like. The AN device may allow interconnection between the terminal device and a 3GPP core network by using the non-3GPP technology.

The AN device can be responsible for functions such as radio resource management, quality of service (quality of service, QoS) management, and data compression and encryption on an air interface side. The AN device provides an access service for the terminal device, to complete forwarding of control signals and user data between the terminal device and the core network.

For example, the AN device may include but is not limited to a macro base station, a micro base station (also referred to as a small cell), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an AP in a Wi-Fi system, a wireless relay node, a wireless backhaul node, a transmission point (transmission point, TP), a transmission reception point (transmission reception point, TRP), or the like; may be a gNB or a transmission point (TRP or TP) in a 5G (for example, NR) system, or one antenna panel or a group of antenna panels (including a plurality of antenna panels) of a base station in the 5G system; or may be a network node constituting a gNB or a transmission point, for example, a distributed unit (distributed unit, DU), or a base station in a 6G system. A specific technology used by the AN device and a specific device form of the AN device are not limited in embodiments of this application.

3. UE: may be referred to as a terminal device, an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a device that provides voice/data for a user, for example, a handheld device or a vehicle-mounted device with a wireless connection function. Currently, some examples of the terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a compute device, another processing device connected to a wireless modem, the wearable device, a terminal device in a 5G network, a terminal device in a future evolved public land mobile communication network (public land mobile network, PLMN), or the like. This is not limited in embodiments of this application.

By way of example and not limitation, in embodiments of this application, the terminal device may alternatively be a wearable device. The wearable device may also be referred to as a wearable intelligent device, and is a generic term for wearable devices developed by intelligently designing daily wearables by using a wearable technology, such as glasses, gloves, watches, clothing, and shoes. The wearable device is a portable device that can be directly worn on the body or integrated into clothes or an accessory of a user. The wearable device is not only a hardware device, but also implements a powerful function through software support, data interaction, and cloud interaction. In a broad sense, wearable intelligent devices include a full-featured and large-size device that can implement complete and partial functions without depending on a smartphone, for example, a smart watch or smart glasses, and a device that focuses on only one type of application function and needs to work with another device such as a smartphone, for example, various smart bands or smart jewelry for physical sign monitoring.

In embodiments of this application, an apparatus configured to implement a function of the terminal device may be the terminal device, or may be an apparatus that can support the terminal device in implementing the function, for example, a chip system or a chip. The apparatus may be installed in the terminal device. In embodiments of this application, the chip system may include a chip, or may include a chip and another discrete component.

4. Core network (core network, CN): can provide user connections, manage users, and bear services. The first node on which the server-side application is deployed may be any one or more core network elements in the core network.

FIG. 3 is a diagram of a structure of a communication architecture in which a server-side application is deployed on a TPF according to an embodiment of this application. The communication architecture includes but is not limited to a TPF, a task control function (task control function, TCF), an access and mobility management function (access and mobility management function, AMF), a RAN, and UE.

TPF: may be responsible for deployment of a server-side application. For example, the TPF may obtain a server-side application provided by a third-party system and load the server-side application to complete deployment.

TCF: may be responsible for managing the TPF. For example, the TCF may provide a function of managing the server-side application.

AMF: may be responsible for providing access and management functions.

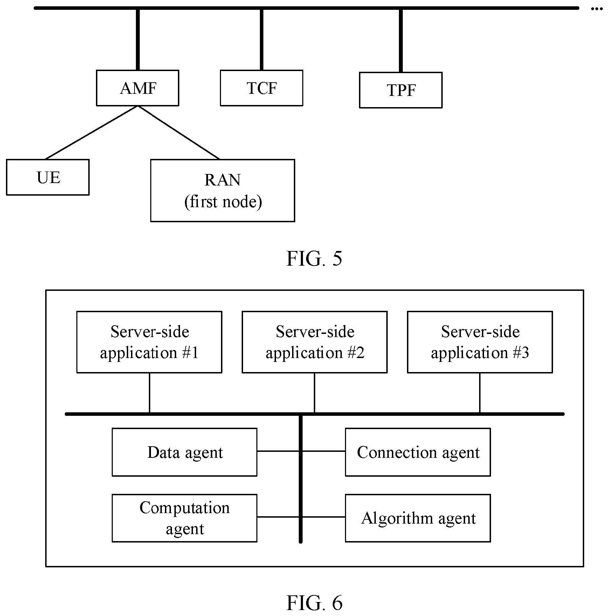

FIG. 4 and FIG. 5 each are a diagram of a structure of a communication architecture in which a server-side application is deployed on a RAN according to an embodiment of this application. Different from the communication architectures shown in FIG. 2 and FIG. 3, the server-side application is deployed on the RAN. The server-side application on the RAN and a client APP on the UE may interact with each other through a communication interface between the RAN and the UE.

It may be understood that, the network architecture shown above is merely an example for description, and the network architecture applicable to embodiments of this application is not limited thereto. Any network architecture that can implement functions of the network elements is applicable to embodiments of this application.

It may be further understood that the AMF, the TPF, the TCF, and the like shown in FIG. 2 to FIG. 5 may be understood as network elements configured to implement different functions, for example, may be combined into a network slice as required. These network elements may be independent devices, may be integrated into a same device to implement different functions, may be network elements in a hardware device, may be software functions running on dedicated hardware, or may be virtualization functions instantiated on a platform (for example, a cloud platform). Specific forms of the network elements are not limited in this application.

It may be further understood that the foregoing names are defined merely for distinguishing between different functions, and should not constitute any limitation on this application. This application does not exclude a possibility of using other names in another future network.

In embodiments of this application, the first node may provide an agent (agent) interface for the server-side application developed by the third-party system, so that the server-side application can interact with a functional network element in the network through the agent interface.

FIG. 6 is a diagram of a structure of a first node according to an embodiment of this application.

One or more server-side applications may be deployed on the first node, for example, a server-side application #1, a server-side application #2, and a server-side application #3 shown in FIG. 6. A plurality of server-side applications may be from a same third-party system or different third-party systems. The first node may provide a corresponding agent interface function based on a function that can be provided by a data plane, a connection plane, a computation plane, or an intelligent plane. For example, the first node may provide a connection pipeline for a user based on the connection plane, and provide a connection function such as QoS session guarantee. For example, the first node may establish a session between the user and the server-side application. For another example, the first node may manage, based on a data plane function, various data generated inside a mobile network. For example, the first node may obtain various data required for running a client application. For another example, the first node may manage and schedule various computational power resources inside the mobile network based on the computation plane. For example, the first node may schedule the computational power resources inside the mobile network to support running of the server-side application. For another example, the first node may manage and schedule an algorithm and a model inside the mobile network based on the intelligent plane. For example, the first node may invoke the algorithm or the model to perform algorithm optimization on the server-side application. This is not particularly limited in this application. For example, with reference to FIG. 6, the first node may provide a data agent, a connection agent, a computation agent, and an algorithm agent, so that the server-side application can interact with a data plane function network element, a connection plane function network element, a computation plane function network element, and an algorithm plane function network element.

It may be understood that the agent functions shown in FIG. 6 are merely examples for description. The first node may further provide another agent interface function based on an application scenario. This is not particularly limited in this application. Therefore, a third-party system of each vendor deploys the server-side application on the first node, and the first node may provide a standard agent interface function, so that each server-side application can invoke the agent interface function to interact with another functional network element, to implement flexible running of the server-side application inside the network.

It may be further understood that in some implementations, one or more server-side applications may be deployed on one first node. In some other implementations, one server-side application may be deployed on a plurality of first nodes in a distributed manner. This is not particularly limited in this application. For ease of description, the following uses an example in which one or more server-side applications are deployed on one first node for description.

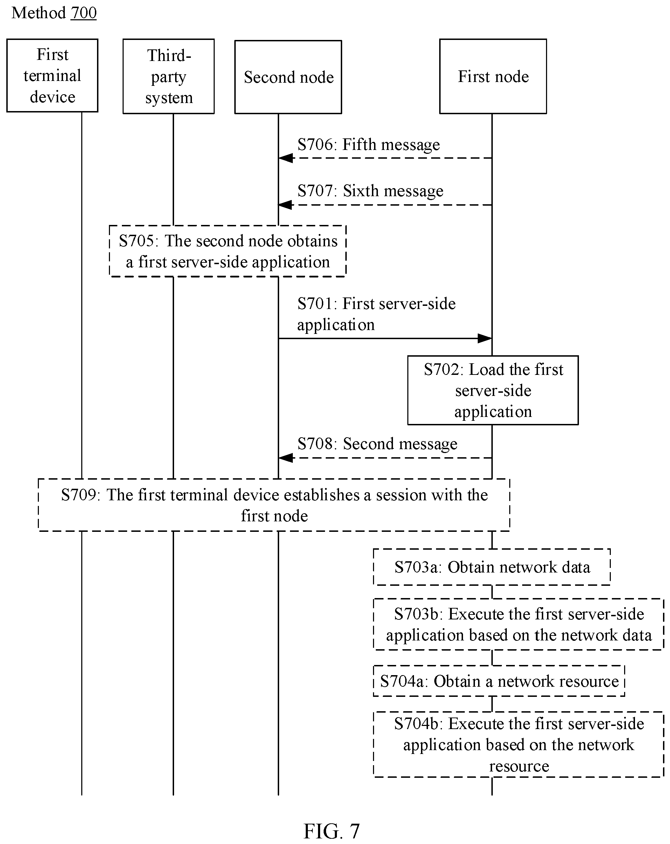

The foregoing describes, with reference to FIG. 1 to FIG. 6, the communication architecture in which the third-party system is supported in deploying the server-side application in the network. With reference to FIG. 7 to FIG. 12, the following describes a communication method according to embodiments of this application.

FIG. 7 is a schematic flowchart of a communication method 700 according to an embodiment of this application. The method 700 may be applied to any one of the foregoing communication architectures in FIG. 1 to FIG. 6. For example, a first node in the method 700 may be the core network element (for example, a TPF) in FIG. 2 or FIG. 3, or the first node may be the RAN in FIG. 4 or FIG. 5. A second node in the method 700 may be a core network element (for example, a TCF), or the second node may be a management plane function (a NAMO). For more detailed descriptions, refer to the foregoing descriptions. Details are not described herein again.

The method 700 may include the following steps.

S701: The second node sends information about a first server-side application to the first node. Correspondingly, the first node receives the information about the first server-side application from the second node.

The first server-side application is from a third-party system. For example, the first server-side application is an application program developed by the third-party system. For more detailed descriptions of the first server-side application, refer to the foregoing descriptions. Details are not described herein again.

The second node may send a first message to the first node, where the first message is used to request the first node to load the first server-side application, and the first message includes the information about the first server-side application. The first node may obtain the first server-side application based on the information about the first server-side application. For example, the first message may be a loading request message, and the loading request message may carry the first server-side application (for example, a program file) or address information of the first server-side application, so that the first node may request to obtain the program file of the first server-side application based on the address information. The first node may load the first server-side application based on the request of the first message, so that the first server-side application is deployed in a network.

In some implementations, the second node sends identification information of the first server-side application to the first node. For example, the second node may include an identifier (for example, a taskID) of the first server-side application in the first message, or the second node may send an identifier of the first server-side application to the first node by using other information. This is not particularly limited in this application. Therefore, the first node may establish a mapping relationship between the first server-side application and the identifier of the first server-side application. When subsequently performing an operation such as updating, executing, or deleting the first server-side application, the first node may use the identifier to indicate the first server-side application.

A manner of generating the identification information of the first server-side application is not particularly limited in this application. For example, the identification information of the first server-side application may be allocated by the second node (for example, the core network element or the management plane function). Alternatively, the identification information of the first server-side application may be allocated by another device having a management function.

S702: The first node loads the first server-side application, to provide a network service for the first terminal device by executing the first server-side application.

The first node may obtain the program file of the first server-side application based on the information about the first server-side application in step S701. The first node may establish an execution environment for the program file of the first server-side application, to complete loading of the first server-side application, so that the first node can execute the first server-side application to provide the network service for the first terminal device.

The first node loads the first server-side application. For example, the first node may create a cluster (pod) for the first server-side application, to load the first server-side application. In this way, the first server-side application has an isolated execution environment, and execution security of the first server-side application is improved. In this case, the first node may establish a mapping relationship between the identifier of the first server-side application and the cluster. This is not particularly limited in this application.

The first node executes the first server-side application. For example, that the first node executes the first server-side application may include at least one or more of the following operations: 1. Running the first server-side application, for example, responsible for processing and responding to a request from a client, and providing a network service for a user. 2. Updating the first server-side application, for example, updating an algorithm of the first server-side application.

Based on this technical solution, the first node supports the third-party system in deploying the first server-side application on the first node, the first node is inside a mobile network, and the first node loads the first server-side application, so that the first node can provide a network service that is based on the first server-side application for a user in a network environment, to improve quality of providing services for users.

The foregoing describes a manner of deploying the first server-side application on the first node. In some implementations, the first node may execute the first server-side application by using a resource in the network. For example, the first node may execute the first server-side application by using network data. In other words, the method 700 may further include step S703 (S703a and S703b). It may be understood that the first node may determine, based on a usage scenario of the network data, a sequence of performing step S703. For example, the first node may perform step S703 before step S702, or the first node may perform step S703 after step S702. This is not particularly limited in this application.

Optionally, S703a: The first node obtains the network data.

Optionally, S703b: The first node executes the first server-side application based on the network data.

The network data may be any data that can be used to execute the first server-side application in the mobile network. For example, the network data may be data stored in the network, and the first node may obtain the network data, and execute the first server-side application based on the network data. In other words, the first node may fully use a data resource stored in the network, to provide a high-quality network service for the user. For another example, the network data may be dynamic data subscribed to by the first node. For example, the first node may subscribe to a link status of the first terminal device, and a device configured to manage the link status of the first terminal device in the network may send, to the first node, the data subscribed to by the first node. In other words, the first node can perceive a network change in a timely manner, and can adjust a service manner based on the network change, to improve user experience. It may be understood that, if the first server-side application is not deployed inside the mobile network, for example, the first server-side application is deployed on a cloud server, the cloud server can obtain the network data only by using a complex interaction process with the mobile network. In this embodiment of this application, a server-side application (net server) deployed inside the mobile network may obtain the network data from the mobile network by using an interface agent service provided by the first node, and may not need to interact with the outside of the mobile network, to improve quality of providing the network service for the user.

A manner of obtaining the network data is not particularly limited in this application. For example, the network data may be obtained based on one or more of the following information: type information of network data needed for executing the first server-side application, data amount information of the network data needed for executing the first server-side application, location information of the first server-side application for providing a network service, location information of the first node, location information of the first terminal device, and identification information of the first terminal device. The foregoing information may be provided by the third-party system, or may be generated by a device (for example, the first node or the second node) in the network based on information provided by the third-party system. This is not particularly limited in this application. For ease of description, the foregoing information used to obtain the network data is referred to as first information in the following.

It should be noted that the first node may obtain the network data based on the first information. Alternatively, another device (for example, the second node) in the network may obtain the network data based on the first information, and send the network data to the first node. This is not particularly limited in this application. For ease of description, the following mainly uses an example in which the first node obtains the network data based on the first information for description.

For example, the first information indicates a type (may also be referred to as a data name) of the network data needed by the first server-side application. For example, the first information indicates that the network data needed by the first server-side application includes historical service data of the served first terminal device, or link status data of the first terminal device, such as a communication bandwidth and a delay. Therefore, the first node may subscribe to the network data from a corresponding network element based on the type of the network data, and execute the first server-side application based on the network data.

For another example, the first information indicates a data amount of the network data needed by the first server-side application. For example, the first node may adjust an algorithm of the first server-side application deployed on the first node, for example, train the algorithm by using training data. The first node may estimate a data amount needed for adjusting the first server-side application, to obtain network data of the corresponding data amount, and execute the first server-side application based on the network data.

For another example, the first information indicates an area in which the first server-side application provides the network service. For example, the first server-side application serves a user in a specific area, so that the first node may obtain network data such as communication data and user data in the specific area, and execute the first server-side application based on the network data.

For another example, the first information indicates a location of the first node. For example, the first node may request data in an area in which the first node is located, for example, network data such as a size of a computational power resource that can be invoked in the area and a size of a transmission resource that can be invoked in the area. Therefore, the first node can adjust the first server-side application based on a communication environment of the area of the first node.

For another example, the first information indicates one or more of a location or an identifier of the first terminal device. The first terminal device may be a terminal device that establishes, with the first node, a session that is based on the first server-side application. For example, the first server-side application establishes a session connection to the first terminal device, and provides the network service for the user through interaction. The first node may obtain, based on the location or the identifier of the first terminal device, network data related to the first network terminal device, for example, link status data of the first terminal device, and execute the first server-side application based on the network data.

The foregoing describes an example of the manner of obtaining the network data. It should be understood that the foregoing example does not impose any particular limitation on this application, and the first node may further obtain, based on other information, the network data used for the first server-side application. For descriptions of a network data obtaining procedure, refer to the following descriptions. For brevity, details are not described herein.

In some implementations, the first node may obtain a network resource to execute the first server-side application. In other words, the method 700 may further include step S704 (including S704a and S704b). It may be understood that the first node may determine, based on a usage scenario of the network resource, a sequence of performing step S704. For example, the first node may perform step S704 before step S702, or the first node may perform step S704 after step S702. This is not particularly limited in this application.

Optionally, S704: The first node obtains the network resource.

The network resource may be any resource invoked by the first node in the network environment for the first server-side application. For example, the network resource may include a communication resource, for example, a time-frequency resource used to transmit session data generated by the first server-side application. For another example, the network resource may include a computational power resource, for example, a computational power node that can be configured to process a compute task inside the network. In other words, the first node may flexibly invoke the network resource to provide a high-quality service for the user. It may be understood that, if the first server-side application is not deployed inside the mobile network, for example, the first server-side application is deployed on the cloud server, the cloud server does not have a technical means of invoking the network resource in the mobile network. In this embodiment of this application, the server-side application (net server) deployed inside the mobile network may invoke the network resource by using the interface agent service provided by the first node, to improve quality of providing the network service for the user.

A manner of obtaining the network resource is not particularly limited in this application. For example, the network resource may be determined based on one or more of the following information: type information of a network resource needed for executing the first server-side application, resource quantity information of the network resource needed for executing the first server-side application, the location information of the first server-side application for providing the network service, the location information of the first node, the location information of the first terminal device, and the identification information of the first terminal device. The foregoing information may be provided by the third-party system, or may be generated by a device (for example, the first node or the second node) in the network based on information provided by the third-party system. This is not particularly limited in this application. For ease of description, the foregoing information used to obtain the network resource is referred to as second information in the following.

It should be noted that the first node may determine the network resource based on the second information. Alternatively, another device (for example, the second node) in the network may determine the network resource based on the second information, and notify the first node of the network resource that can be invoked. This is not particularly limited in this application. For ease of description, the following mainly uses an example in which the first node determines the network resource based on the second information for description.

For example, the second information indicates a type of the network resource needed by the first server-side application. For example, the second information indicates that the network resource needed by the first server-side application includes a transmission resource, a computational power resource, and the like. Therefore, the second node may request the network resource from a corresponding network element based on the type of the network resource, and execute the first server-side application based on the network resource.

For another example, the second information indicates a resource quantity of network resources needed by the first server-side application. For example, the first node may determine, based on a running status of the first server-side application, a resource quantity of needed computational power resources. For example, the first server-side application is a server-side application of a game type. When processing a complex game scenario, the first server-side application may request a computational power resource via the first node, to implement computational power support.

For another example, the second information indicates an area in which the first server-side application provides the network service. For example, if the first server-side application serves a user in a specific area, the first node may invoke a network resource allocated to the area.

For another example, the second information indicates the location of the first node. The first node may request the network resource based on the location of the first node. For example, the first node may request a computational power node that is close to the first node to provide computational power support. Therefore, running efficiency of the first server-side application can be improved.

For another example, the second information indicates one or more of the location or the identifier of the first terminal device. The first terminal device may be the terminal device that establishes, with the first node, the session that is based on the first server-side application. For example, the first node may determine a communication status of the first terminal device based on the location or the identifier of the first terminal device, to determine whether to adjust a transmission resource allocated to the first terminal device.

The foregoing describes an example of the manner of obtaining the network resource. It should be understood that the foregoing example does not impose any particular limitation on this application, and the first node may further obtain, based on other information, the network resource used for the first server-side application. For descriptions of a network resource obtaining procedure, refer to the following descriptions. For brevity, details are not described herein.

It may be further understood that the first node may perform one or more of S703 and S704. When the first node performs S703 and S704, S703b and S704b may be performed together, that is, the first node may execute the first server-side application based on the network data and the network resource. Alternatively, S703b and S704b may be separately performed. For example, the first node may respond to a request of a client application based on the network data, and implement algorithm optimization of a server-side application program file based on the network resource. This is not particularly limited in this application.

The foregoing describes a manner in which the first node loads the first server-side application and optionally obtains the network data and the network resource. It may be understood that the foregoing first server-side application is provided by the third-party system. In other words, before step S701 (the second node sends the first server-side application to the first node), the method 700 may further include the following step S705.

Optionally, S705: The second node obtains the first server-side application.

A manner in which the second node obtains the first server-side application is related to a type of the second node.

In a first possible implementation, when the second node is a management plane function (for example, a NAMO), the second node may obtain the first server-side application by interacting with an interface of the third-party system. For example, the NAMO may provide an open interface. The third-party system may send the first server-side application to the NAMO through the interface. Therefore, the NAMO may deploy the first server-side application provided by the third-party system on the first node. For example, the NAMO generates a first message based on the first server-side application, and sends the first message to the first node.

In some implementations, the third-party system may further send the information about the first server-side application to the NAMO through the interface, for example, a type of a network resource needed by the first server-side application, a resource quantity of network resources, a type of network data, a data amount of the network data, and an area in which the network service is provided that are estimated by the third-party system. The first message generated by the second node may further carry the foregoing information. For detailed descriptions of the foregoing information, refer to the foregoing descriptions. For brevity, details are not described again.

In a second possible implementation, when the second node is a core network element (for example, a TCF), the second node may obtain the first server-side application from the third-party system by using a management plane function (for example, the NAMO). For example, the NAMO may provide the open interface. The third-party system sends the first server-side application to the NAMO through the interface. The NAMO generates a seventh message based on the first server-side application, and sends the seventh message to the TCF. The seventh message is used to request to deploy the first server-side application, and the seventh message carries the first server-side application. For example, the seventh message may be a deployment request message. After receiving the seventh message, the TCF may generate a first message based on the seventh message, and send the first message to the first node. Similar to the first implementation, in some implementations, the third-party system may send the information about the first server-side application to the NAMO, so that the seventh message generated by the NAMO and the first message generated by the TCF may carry the information about the first server-side application. For descriptions of the information about the first server-side application, refer to the foregoing descriptions. Details are not described herein again.

In some implementations, after obtaining the first server-side application, the second node may allocate an identifier, for example, a task identifier (task ID), to the first server-side application. The second node may establish a mapping relationship between the first server-side application and the identifier, and send identification information to the first node by using the first message. Therefore, in subsequent operations, the first node and the second node may indicate the first server-side application by using the identifier.

The foregoing describes a manner in which the second node obtains the first server-side application. In some implementations, the second node may manage at least one node. In this case, the second node may select, from the at least one node, the first node on which the first server-side application is deployed.

It may be understood that one server-side application may be deployed on one node in a centralized manner, or may be deployed on a plurality of nodes in a distributed manner. For ease of description, the following mainly uses an example in which one server-side application is deployed on one node for description.

The second node may determine the first node in a plurality of manners. This is not particularly limited in this application. For example, the second node may determine the first node based on statuses of a plurality of nodes. For example, the second node may select a node with largest storage space from the plurality of nodes as the first node. For another example, the second node may learn of, from the third-party system, an area in which the first server-side application expects to provide the network service, and select the first node based on the area and location information of a plurality of nodes. For example, the second node may select a node that is located in the area or that is closest to the area from the plurality of nodes as the first node. Therefore, the second node can select the matched first node to deploy the first server-side application, to further improve the quality of providing the network service for the user.

In some implementations, the second node determines the first node, and may establish a mapping relationship between the first server-side application and the location information and/or the identification information of the first node, so that when receiving a message including the location information and/or the identification information of the first node, the second node may determine, based on the mapping relationship, to index the first server-side application.

In some implementations, the second node may manage at least one node by using a registration procedure. For ease of description, the following uses a manner in which the first node registers with the second node as an example for description. In other words, the method may further include step S706.

Optionally, S706: The first node sends a fifth message to the second node. Correspondingly, the second node receives the fifth message from the first node.

The fifth message is used for registration of the first node. For example, the fifth message is a registration request message. In some implementations, the fifth message may include one or more of the following information: the location information of the first node, the identification information of the first node, or capability information of the first node. The capability information of the first node may mean a capability of the first node for deploying the server-side application, for example, a computational power capability of the first node and a capability of an agent interface. It may be understood that the second node may store location information, identification information, or capability information of a plurality of nodes, so that the second node provides a management service based on the foregoing information, for example, determines the matched first node for the first server-side application.

In some implementations, the first node may dynamically notify the second node of a capability change of the first node. In other words, the method may further include step S707.

Optionally, S707: The first node sends a sixth message to the second node. Correspondingly, the second node receives the sixth message from the first node.

The sixth message is used to notify the capability change of the first node. For example, the sixth message may be a status update message. In some implementations, the capability change of the first node may trigger the first node to send the sixth message to the second node. For example, the computational power capability of the first node changes from having idle computational power to having no idle computational power. The sixth message may indicate that the first node has no idle computational power, so that the second node does not select, due to registration information, the first node to deploy the first server-side application. In some other implementations, the first node may periodically send the sixth message to the second node, that is, periodically report the status update message. This is not particularly limited in this application.

The foregoing describes an implementation in which the second node manages the first node and deploys the first server-side application on the first node after obtaining the first server-side application from the third-party system. In some implementations, after completing loading of the first server-side application, the first node may return a loading result to the second node. In other words, after step S702, the method may further include the following step S708.

Optionally, S708: The first node sends a second message to the second node. Correspondingly, the second node receives the second message from the first node.

The second message is used to notify the second node of the loading result of the first server-side application. For example, if the first node successfully loads the first server-side application, the second message may be used to notify the second node that the first server-side application is successfully loaded. If the first node fails to load the first server-side application, the second message may be used to notify the second node that the first server-side application fails to be loaded. When the loading fails, the second message may be further used to notify the second node of a reason why the first server-side application fails to be loaded, so that the second node may perform adjustment based on the failure reason, for example, change a node on which the first server-side application is deployed.

In some implementations, the second message may include the identification information of the first server-side application. For example, the second node may have a mapping relationship between the first server-side application and the identification information, so that the second node may determine, based on the identification information in the second message, a loading result of a specific server-side application included in the second message.

It should be noted that when the second node is the core network element (for example, the TCF), the second node may feed back any one or more of the identification information of the first server-side application, the address information of the first node, and the identification information of the first node to the management plane function (for example, the NAMO), so that the NAMO may feed back the foregoing information to the third-party system. When the second node is the management plane function (for example, the NAMO), the second node may feed back any one or more of the identification information of the first server-side application, the address information of the first node, and the identification information of the first node to the third-party system, and the second node may further feed back any one or more of the identification information of the first server-side application, the address information of the first node, and the identification information of the first node to the TCF, so that the TCF may obtain context information about deployment of the first server-side application, to perform a subsequent operation related to the first server-side application, for example, establish a session between the first node and the first terminal device.

In some implementations, the third-party system obtains any one or more of the identification information of the first server-side application, the address information of the first node, and the identification information of the first node, and may update the foregoing information to a client program file on a first terminal device side, so that the first terminal device side requests to establish the session between the first terminal device and the first node, and the first server-side application on a network side (the first node) can directly communicate and interact with a client on the first terminal device side. In other words, the method 700 may further include the following step S709.

Optionally, S709: The first terminal device establishes the session with the first node.

The first terminal device may obtain one or more of the following: the identification information of the first server-side application, the address information of the first node, or the identification information of the first node, to request the core network element (for example, the TCF) to control establishment of the session between the first terminal device and the first node.

There may be a plurality of manners of establishing the session between the first terminal device and the first node. In a first possible implementation, the first terminal device may establish a session at a server-side application granularity with the first node. In other words, the first terminal device may establish, with the first node, a session used to carry data of the first server-side application. For example, the first terminal device obtains the identification information of the first server-side application, and sends, to the TCF, an eighth message used to request to establish a session, where the eighth message carries the identification information of the first server-side application, so that the TCF may establish the session for the first terminal device and the first node based on the identification information of the first server-side application. In a second possible implementation, the first terminal device may establish a session at a node granularity with the first node. In other words, if a plurality of server-side applications are deployed on the first node, the plurality of server-side applications may share one task session. For example, the first terminal device obtains the address information and/or the identification information of the first node, and sends, to the TCF, an eighth message used to request to establish a session, where the eighth message carries the address information and/or the identification information of the first node, so that the TCF may establish the session for the first terminal device and the first node based on the address information and/or the identification information of the first node.

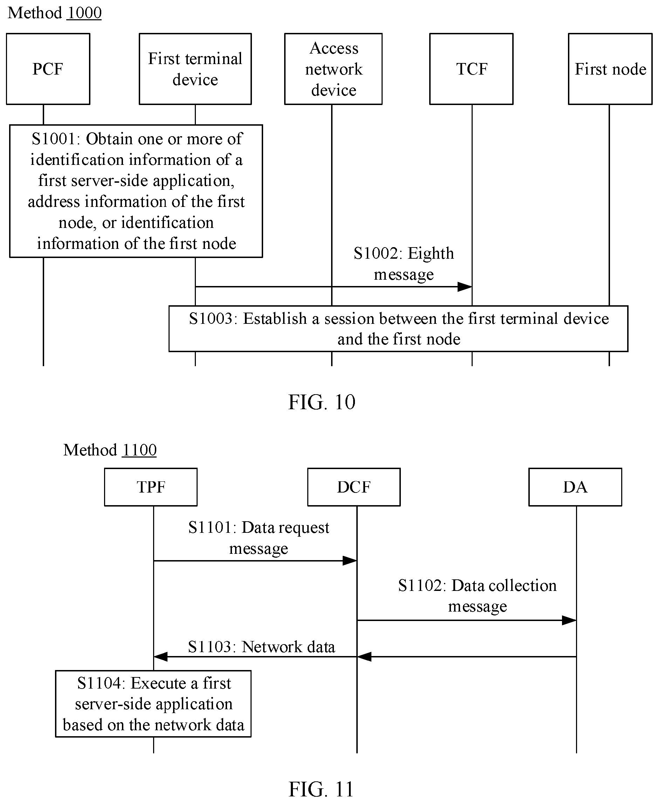

For more detailed content of establishing the session between the first terminal device and the first node, refer to the following descriptions in FIG. 10. Details are not described herein.

The first node may send a data packet to the first terminal device via the session, and the first terminal device may send a data packet to the first node via the session. The data packet may include the identification information of the first server-side application. For example, the data packet sent by the first terminal device may include the identification information of the first server-side application, so that the first node may transmit data in the data packet to the first server-side application based on the identification information of the first server-side application.

It may be understood that the first node and the first terminal device may directly communicate with each other, or the first node and the first terminal device may communicate with each other via another network device. For example, the first node is the core network element, and the first node and the first terminal device may communicate with each other via an access network device.

Based on this technical solution, the first node supports the third-party system in deploying the first server-side application on the first node, the first node is inside a mobile network, and the first node loads the first server-side application, so that the first node can provide a network service that is based on the first server-side application for a user in a network environment, to improve quality of providing services for users.

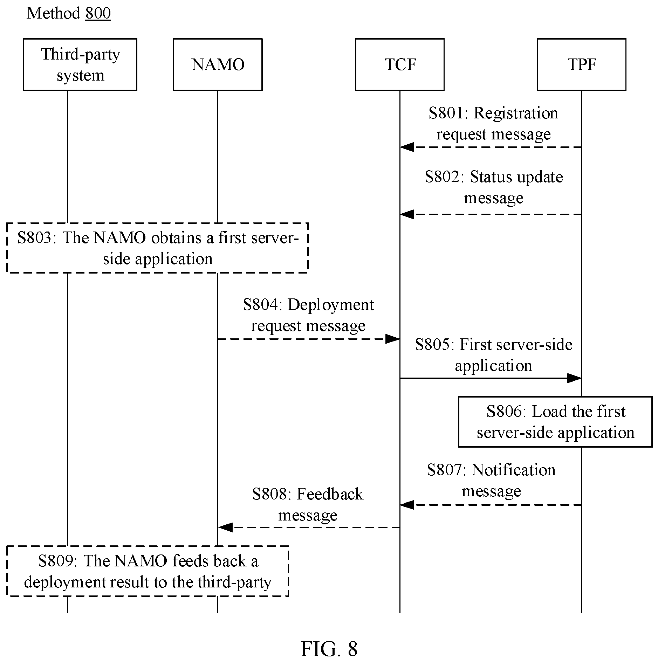

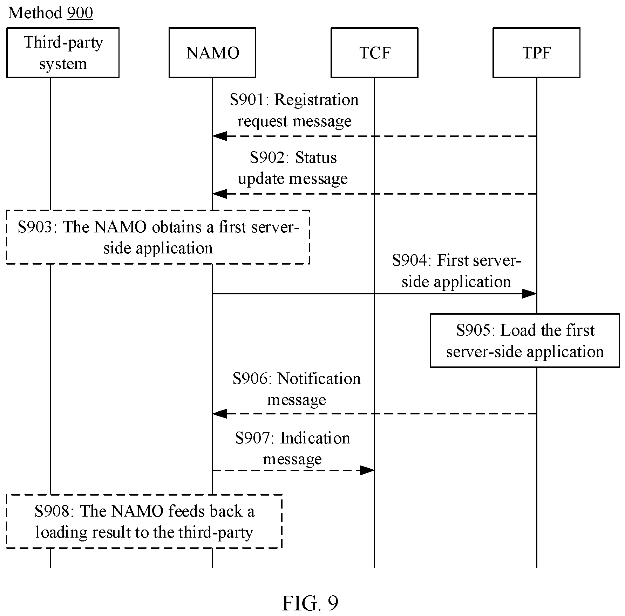

The foregoing describes a technical solution in which the second node deploys the first server-side application on the first node. The second node may be the core network element (for example, the TCF) or the management plane function (for example, the NAMO), and different types of second nodes may have different deployment procedures. For ease of understanding embodiments of this application, the following describes, with reference to FIG. 8, an example of a procedure in which the second node is the core network element, and describes, with reference to FIG. 9, an example of a procedure in which the second node is the management plane function. For ease of understanding, in the following descriptions, an example in which the first message is a loading request message, the second message is a notification message, the fifth message is a registration request message, the sixth message is a status update message, the seventh message is a deployment request message, the eighth message is a task session establishment request message, and the ninth message is a URSP update message is used for description.

FIG. 8 is a schematic flowchart of a communication method 800 in which a second node is a core network element according to an embodiment of this application. For ease of description, in descriptions of this embodiment, an example in which a first node is a TPF and the second node is a TCF is used for description.

The method 800 may include the following steps.

Optionally, in S801, the TPF sends a registration request message to the TCF. Correspondingly, the TCF receives the registration request message from the TPF.

The registration request message is used for registration of the TPF. For more detailed descriptions of this step, refer to the descriptions of step S706 in the method 700. Details are not described herein.

Optionally, in S802, the TPF sends a status update message to the TCF. Correspondingly, the TCF receives the status update message from the TPF.

The status update message is used to notify the TPF of a capability change. For more detailed descriptions of this step, refer to the descriptions of step S707 in the method 700. Details are not described herein.

Optionally, in S803, a NAMO obtains a first server-side application.

The NAMO may provide an open interface, and the NAMO may obtain the first server-side application by interacting with an interface of a third-party system. In some implementations, the NAMO may further obtain information related to the first server-side application from the third-party system. For more detailed descriptions of this information and this step, refer to the descriptions of step S705 in the method 700. Details are not described herein.

Optionally, in S804, the NAMO sends a deployment request message to the TCF. Correspondingly, the TCF receives the deployment request message from the NAMO.

The deployment request message is used to request to deploy the first server-side application, and the deployment request message carries the first server-side application.

In some implementations, the TCF may allocate an identifier to the first server-side application.

In some implementations, the TCF manages a plurality of TPFs, and may select, from the plurality of TPFs, the TPF used to deploy the first server-side application.

For more detailed descriptions of this step, refer to the descriptions of step S705 in the method 700. Details are not described herein.

S805: The TCF sends the first server-side application to the TPF. Correspondingly, the TPF receives the first server-side application from the TCF.

In some implementations, the TCF may send a loading request message to the TPF. The loading request message is used to request the TPF to load the first server-side application, and the loading request message includes the first server-side application.

In some implementations, the loading request message further includes identification information of the first server-side application.

For more detailed descriptions of this step, refer to the descriptions of step S701 in the method 700. Details are not described herein.

S806: The TPF loads the first server-side application.

The TPF loads the first server-side application. If the TPF successfully completes loading of the first server-side application, it may be considered that deployment of the first server-side application inside a network is completed.

For more detailed descriptions of this step, refer to the descriptions of step S702 in the method 700. Details are not described herein.

Optionally, in S807, the TPF sends a notification message to the TCF. Correspondingly, the TCF receives the notification message from the TPF.

The notification message is used to notify the TCF of a loading result of the first server-side application. For more detailed descriptions of this step, refer to the descriptions of step S708 in the method 700. Details are not described herein.

Optionally, in S808, the TCF sends a feedback message to the NAMO. Correspondingly, the NAMO receives the feedback message from the TCF.

The feedback message is used to notify the NAMO of the loading result of the first server-side application. The feedback message may include one or more of the following information: the identification information of the first server-side application, address information of the TPF, or identification information of the TPF.

Optionally, in S809, the NAMO feeds back the loading result to the third-party system. Correspondingly, the third-party system obtains a feedback result from the NAMO.

The NAMO may feed back the loading result of the first server-side application to the third-party system. In some implementations, the NAMO may further feed back one or more of the following information: the identification information of the first server-side application, the address information of the TPF, or the identification information of the TPF to the third-party system. In this way, the third-party system may update the foregoing information to a client program file on a UE side, so that the first server-side application of the TPF can directly communicate with and interact with a client on the UE side.

Based on this technical solution, the first node supports the third-party system in deploying the first server-side application on the first node, the first node is inside a mobile network, and the first node loads the first server-side application, so that the first node can provide a network service that is based on the first server-side application for a user in a network environment, to improve quality of providing services for users.

FIG. 9 is a schematic flowchart of a communication method 900 in which a second node is a core network element according to an embodiment of this application. For ease of description, in descriptions of this embodiment, an example in which a first node is a TPF and the second node is a NAMO is used for description.

The method 900 may include the following steps.

Optionally, in S901, the TPF sends a registration request message to the NAMO. Correspondingly, the NAMO receives the registration request message from the TPF.

The registration request message is used for registration of the TPF. For more detailed descriptions of this step, refer to the descriptions of step S706 in the method 700. Details are not described herein.

Optionally, in S902, the TPF sends a status update message to the NAMO. Correspondingly, the NAMO receives the status update message from the TPF.

The status update message is used to notify the TPF of a capability change. For more detailed descriptions of this step, refer to the descriptions of step S707 in the method 700. Details are not described herein.

Optionally, in S903, the NAMO obtains a first server-side application.

The NAMO may provide an open interface, and the NAMO may obtain the first server-side application by interacting with an interface of a third-party system. In some implementations, the NAMO may further obtain information related to the first server-side application from the third-party system. For more detailed descriptions of this information and this step, refer to the descriptions of step S705 in the method 700. Details are not described herein.

Optionally, in S904, the NAMO sends the first server-side application to the TPF. Correspondingly, the TPF receives the first server-side application from the NAMO.

In some implementations, the NAMO may send a loading request message to the TPF. The loading request message is used to request the TPF to load the first server-side application, and the loading request message includes the first server-side application.

In some implementations, the NAMO may allocate an identifier to the first server-side application.

In some implementations, the NAMO manages a plurality of TPFs, and may select, from the plurality of TPFs, the TPF used to deploy the first server-side application.

In some implementations, the loading request message further includes identification information of the first server-side application.

For more detailed descriptions of this step, refer to the descriptions of step S701 in the method 700. Details are not described herein.

S905: The TPF loads the first server-side application.

The TPF loads the first server-side application. If the TPF successfully completes loading of the first server-side application, it may be considered that deployment of the first server-side application inside a network is completed.

For more detailed descriptions of this step, refer to the descriptions of step S702 in the method 700. Details are not described herein.

Optionally, in S906, the TPF sends a notification message to the NAMO. Correspondingly, the NAMO receives the notification message from the TPF.

The notification message is used to notify the TCF of a loading result of the first server-side application. For more detailed descriptions of this step, refer to the descriptions of step S708 in the method 700. Details are not described herein.

Optionally, in S907, the NAMO sends an indication message to the TCF. Correspondingly, the TCF receives the indication message from the NAMO.

The indication message indicates the loading result of the first server-side application to the TCF. The indication message may include one or more of the following information: the identification information of the first server-side application, address information of the TPF, or identification information of the TPF. Therefore, the TCF may perform a subsequent management operation based on the indication message.

Optionally, in S908, the NAMO feeds back the loading result to the third-party system. Correspondingly, the third-party system obtains the loading result from the NAMO.

The NAMO may feed back the loading result of the first server-side application to the third-party system. In some implementations, the NAMO may further feed back one or more of the following information: the identification information of the first server-side application, the address information of the TPF, or the identification information of the TPF to the third-party system. Therefore, the third-party system may update the foregoing information to a client program file on a UE side, so that the first server-side application of the TPF can directly communicate with and interact with the client program file on the UE side.

Based on this technical solution, the first node supports the third-party system in deploying the first server-side application on the first node, the first node is inside a mobile network, and the first node loads the first server-side application, so that the first node can provide a network service that is based on the first server-side application for a user in a network environment, to improve quality of providing services for users.

The foregoing separately describes examples of the deployment procedure, of the first server-side application, in which the second node is the TCF and the second node is the NAMO. In the foregoing two deployment procedures, the third-party system may learn of the loading result of the first server-side application, and update loaded related information, for example, the identification information of the first server-side application, location information of the first node, or the identification information of the first node, to a client program file on a first terminal device side, and the first terminal device may request to establish a session between the first terminal device and the first node, so that the first server-side application of the TPF can directly communicate with and interact with a client on the first terminal device side. For ease of understanding of embodiments of this application, the following describes, with reference to FIG. 10, an example of a procedure of establishing a session between a TPF and UE.

FIG. 10 is a schematic flowchart of a method 1000 for establishing a session between UE and a first node according to an embodiment of this application.

S1001: The UE obtains one or more of the following: identification information of a first server-side application, address information of the first node, or identification information of the first node.

In some implementations, a first terminal device receives a ninth message, where the ninth message indicates a route selection policy rule of the first server-side application, and the ninth message includes one or more of the identification information of the first server-side application, the address information of the first node, or the identification information of the first node. For example, the ninth message is a user route selection policy (UE route selection policy, URSP) update message. For example, a third-party system obtains one or more of the identification information of the first server-side application, the address information of the first node, and the identification information of the first node from a management plane function. The third-party system may send the foregoing information to a policy control function (policy control function, PCF). The PCF may generate a URSP rule (rule) based on the foregoing information, and send the ninth message to the first terminal device based on the URSP rule. The URSP rule may carry an application description (app desc) corresponding to the first server-side application. Therefore, the UE may obtain, based on the application description, a policy for communicating with the first server-side application.

It may be understood that the PCF may obtain deployment of the first server-side application from the third-party system. For example, the third-party system notifies the PCF of any one or more of the identification information of the first server-side application, the identification information of the first node, or the address information of the first node. A manner in which the PCF generates the URSP rule is not particularly limited in this application. For a related format, refer to a standard protocol. Details are not described herein.

It should be noted that the URSP rule generated by the PCF based on the first server-side application may not include a data network name (data network name, DNN) field. In this embodiment of this application, the first server-side application is deployed inside a mobile network, and data of the first server-side application is transmitted between the first node and the UE inside the mobile network, so that the URSP rule may not include the DNN field.

Optionally, the URSP update message includes the identification information of the first server-side application. The UE obtains the identification information of the first server-side application, and may establish a session between the UE and the first server-side application based on the identification information of the first server-side application. In other words, the UE may establish a session with the first node at a granularity of a server-side application.

Optionally, the URSP update message includes the identification information and/or the address information of the first node. After obtaining the address information and/or the identification information of the first node, the UE may establish the session between the UE and the first node based on the address information and/or the identification information of the first node. Optionally, if a plurality of server-side applications are deployed on the first node, the plurality of server-side applications may share the session to communicate with the UE.

In some other implementations, the third-party system may update one or more of the identification information of the first server-side application, the address information of the first node, or the identification information of the first node to a corresponding client application on a UE side, and the UE may obtain the foregoing information by updating the client application. This is not particularly limited in this application.

S1002: The first terminal device sends an eighth message to a core network element (the following uses a TCF as an example for description). Correspondingly, the TCF receives the eighth message from the first terminal device.

The eighth message is used to request to establish a session between the first terminal device and the first node. For example, the eighth message may be a task session establishment request message. The eighth message may carry one or more of the identification information of the first server-side application, the address information of the first node, and the identification information of the first node. For example, when generating data to be sent to the first server-side application, the client application on the UE side may match, based on an application description (app des) of the client application, the URSP rule that is based on the first server-side application. The UE may obtain one or more of the identifier of the first server-side application, the address information of the first node, and the identification information of the first node from the URSP rule, and generate the eighth message.

It should be noted that in the deployment procedure of the first server-side application described above, a second node configured to deploy the first server-side application on the first node may be a core network element, or may be a management plane function. When the second node is the core network element TCF, step S710 may be described as that the first terminal device sends the eighth message to the second node. When the second node is the management plane function NAMO, after completing deployment of the first server-side application, the NAMO may indicate one or more of the identification information of the first server-side application, the address information of the first node, and the identification information of the first node to the TCF, and the TCF performs a subsequent operation on the first server-side application. Therefore, in this case, in step S1002, the first terminal device sends the eighth message to the TCF.

In a first possible implementation, the eighth message may carry the identification information of the first server-side application. Therefore, the TCF may find, based on the identification information of the first server-side application and by querying a context, the first node on which the first server-side application is located, and establish the session between the first node and the first terminal device. The session may be at a granularity of a server-side application. In other words, the first node may establish a mapping relationship between the identifier of the first server-side application and the session, so that the first node can subsequently communicate with the first terminal device based on the identifier of the first server-side application.

In a second possible implementation, the eighth message may carry at least one of the identification information and the address information of the first node. Therefore, the TCF may establish the session between the first node and the UE based on at least one of the identification information and the address information. At least one server-side application on the first node may share the session.

S1003: The first terminal device establishes the session with the first node.

The TCF may control the first terminal device to establish the session with the first node based on the first server-side application. It should be noted that the first terminal device needs to be connected to the first node through an access network device. Therefore, establishment of the session between the first terminal device and the first node also needs to be implemented through the access network device. For example, the TCF may determine the corresponding first node based on the eighth message, and establish, for the access network device and the first node, a tunnel corresponding to the session. For example, the TCF establishes the session at a granularity of a node; the TCF sends a first session establishment message to the first node, where the first session establishment message may include a UDP port, a TE ID, and IP address information on an access device side; and the TCF sends a second session establishment message to the access network device, where the second session establishment message may include a UDP port, a TE ID, and IP address information on a first node side, and the identification information of the first terminal device, to establish the tunnel between the first node and the access network device. The access network device may send a bearer establishment configuration message to the first terminal device, where the bearer establishment configuration message includes bearer identification information, to establish a bearer between the access network device and the first terminal device, to complete establishment of the session between the first terminal device and the first node. For another example, if the TCF establishes the session at a granularity of a server-side application, the first session establishment message, the second session establishment message, and the bearer establishment configuration message may further carry the identification information of the first server-side application, so that the first node can establish a mapping relationship between the server-side application and the session, and the first terminal device can establish a mapping relationship between the application and the session.

The first terminal device and the first node may transmit a data packet by using the established session. For example, if the session is at a granularity of a task session, the first terminal device may send the data packet to the first node by using the session, and the first node may transfer data to the first server-side application based on the mapping relationship between the session and the first server-side application, to complete data transfer. If at least one server-side application on the first node shares the session, the first terminal device may include the identifier of the first server-side application in the data packet, and the first node may transfer the data to the first server-side application based on the identifier of the first server-side application, to complete data transfer.

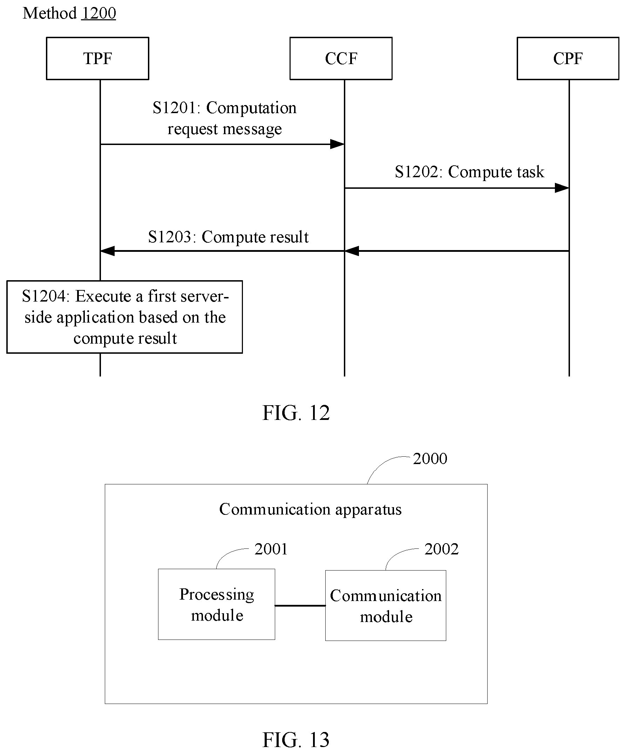

The foregoing describes the example of the procedure of establishing the session between the first terminal device and the first node. For ease of understanding embodiments of this application, the following separately describes, with reference to FIG. 11 and FIG. 12, examples of procedures in which the TPF obtains network data and a network resource. The network data is data needed by the first server-side application.

It may be understood that the procedure in which the TPF obtains the network data is related to a type of the network data. For example, the TPF may request the network data from a data control function (data control function, DCF). For another example, the TPF may also request to obtain the network data from a network data analytics function (network data analytics function, NWDAF). This is not particularly limited in this application. For ease of description, FIG. 11 is described by using an example in which the TPF requests to obtain the network data from the DCF.

FIG. 11 is a schematic flowchart of a method for obtaining network data according to an embodiment of this application.

S1101: A TPF sends a data request message to a DCF. Correspondingly, the DCF receives the data request message from the TPF.

The data request message is used to request network data needed by a first server-side application. For example, the first server-side application may send a data subscription message to the TPF through an internal interface, to notify the TPF of the network data needed by the first server-side application. The TPF may provide an agent interface used to request the network data, in other words, the TPF may generate, based on the data subscription message, the data request message that can be sent to the DCF, so that the network data can be obtained from the DCF. For more detailed descriptions of the network data, refer to the foregoing descriptions of step S703 in FIG. 7. For brevity, details are not described herein again.

For example, UE establishes a task session with the TPF based on the first server-side application, the first server-side application may request to subscribe to link status data of the UE, and the TPF may request the link status data from the DCF. In this way, the TPF can obtain the link status data, and the first server-side application may invoke the link status data.

In some implementations, the TPF may periodically send the data request message to the DCF. For example, the TPF may determine, based on a requirement of the first server-side application, a periodicity of sending the data request message, for example, requesting the network data at an interval of six hours.

S1102: The DCF sends a data collection message to a data node (data agent, DA). Correspondingly, the DA receives the data collection message from the DCF.

The DCF may generate the data collection message based on the data request message, to request to obtain the network data from the DA.

S1103: The DA sends a data feedback message to the TPF. Correspondingly, the TPF receives the data feedback message from the DA.

The DA may return, to the TPF based on the data collection message, the network data needed by the first server-side application. The TPF may return the network data to the first server-side application through the internal interface.

Based on this technical solution, a server-side application of a third-party system may be deployed on the TPF inside a mobile network, and the TPF may provide, for the first server-side application, the agent interface used to request the network data, so that the first server-side application can flexibly invoke the network data, to improve quality of a network service provided for a user.

It may be understood that the procedure in which the TPF obtains the network resource is related to a type of the network resource. In some implementations, the TPF may send a fourth message to another device inside the mobile network, where the fourth message is used to request to execute a first task, and the first task is generated based on the first server-side application; and receive an execution result of the first task from the another device. In other words, the TPF may generate the first task based on the first server-side application, and invoke the network resource to assist in executing the first task. The first task is related to the network resource to be invoked by the TPF. For example, when the TPF invokes a computational power resource, the first task may be a compute task; or when the TPF invokes an intelligent resource (for example, an algorithm or a model), the first task may be a training task. This is not particularly limited in this application. For ease of understanding of embodiments of this application, the following uses an example in which the first task is the compute task for description. The TPF may request the computational power resource from a compute control function (compute control function, CCF). This is not particularly limited in this application. For ease of description, FIG. 12 is described by using an example in which the TPF requests the CCF to obtain the computational power resource.

FIG. 12 is a schematic flowchart of a method for obtaining a computational power resource according to an embodiment of this application.

S1201: A TPF sends a computation request message to a CCF. Correspondingly, the CCF receives the computation request message from the TPF.

The computation request message is used to request the CCF to perform a compute task. The compute task is generated based on a first server-side application.

For example, the first server-side application may send a computational power request to the TPF through an internal interface, to notify the TPF of a computational power resource needed by the first server-side application. For example, the first server-side application may send the compute task to the TPF. Alternatively, for another example, the first server-side application may send a computational power requirement to the TPF, and the TPF generates the compute task based on the computational power requirement.

The TPF may provide an agent interface configured to request the computational power resource. In other words, the TPF may generate, based on the compute task, the computation request message that can be sent to the CCF, so that the CCF may execute the compute task. For more detailed descriptions of the computational power resource, refer to the foregoing descriptions of step S704 in FIG. 7. For brevity, details are not described herein again.

S1202: The CCF sends the compute task to a compute process function (compute process function, CPF). Correspondingly, the CPF receives the compute task from the CCF.

The CPF may execute the compute task, and generate a compute result needed by the first server-side application.

S1203: The CPF sends the compute result to the TPF. Correspondingly, the TPF receives the compute result from the CPF.

The TPF obtains the compute result from the CPF, and may return the compute result to the first server-side application through an internal interface.

Based on this technical solution, a server-side application of a third-party system is deployed on the TPF inside a mobile network, and the TPF may provide an agent interface configured to request a network resource for the first server-side application, so that the first server-side application can flexibly invoke the network resource. For example, when processing a complex computation scenario, the first server-side application may request a computational power resource of a network, to perform computational power support, and improve quality of providing a network service for a user.

The foregoing describes in detail the method for providing a network service in this application. The following describes a communication apparatus provided in this application.

To implement functions of the communication apparatuses (for example, the first node, the second node, and the first terminal device) in embodiments of this application, each communication apparatus may implement corresponding functions in a form of a hardware structure, a software module, or a combination of a hardware structure and a software module.

FIG. 13 shows a communication apparatus 2000 according to this application.

As shown in FIG. 13, the communication apparatus 2000 includes a processing module 2001 and a communication module 2002. The communication apparatus 2000 may be a communication device, or may be an apparatus that is used for the communication device and that can implement a corresponding function of the communication device, for example, a chip, a chip system, or a circuit. For example, the communication device may include a first node (for example, a TPF or a RAN), a second node (for example, a TCF or a NAMO), a first terminal device, and the like.

The communication module may also be referred to as a transceiver module, a transceiver, a transceiver machine, a transceiver apparatus, or the like. The processing module may also be referred to as a processor, a processing board, a processing unit, a processing apparatus, or the like. Optionally, the communication module is configured to perform a sending operation and a receiving operation of the terminal device or the network device in any one of the foregoing method embodiments. A component configured to implement a receiving function in the communication module may be considered as a receiving unit, and a component configured to implement a sending function in the communication module may be considered as a sending unit. In other words, the communication module includes the receiving unit and the sending unit. The processing module is configured to perform an operation/processing related to an internal implementation of the terminal device or the network device in any one of the foregoing method embodiments. It should be understood that for a corresponding specific operation of each module, refer to the descriptions in the method embodiments. Details are not described again.

In addition, it should be noted that the communication module and/or the processing module may be implemented through a virtual module. For example, the processing module may be implemented through a software functional unit or a virtual apparatus, and the communication module may be implemented through a software function or a virtual apparatus. Alternatively, the processing module or the communication module may be implemented through an entity apparatus. For example, if the apparatus is implemented through a chip/hardware circuit, the communication module may be an input/output circuit and/or a communication interface, and perform an input operation (corresponding to the foregoing receiving operation) and an output operation (corresponding to the foregoing sending operation). The processing module is an integrated circuit, a logic circuit, or the like.

Division into the modules in this application is an example, is merely division into logical functions, and may be other division during actual implementation. In addition, functional modules in examples of this application may be integrated into one module, or each of the modules may exist alone physically, or two or more modules may be integrated into one module. The foregoing integrated module may be implemented in a form of hardware, or may be implemented in a form of a software functional module, or a functional module combining hardware and software. This is not limited.

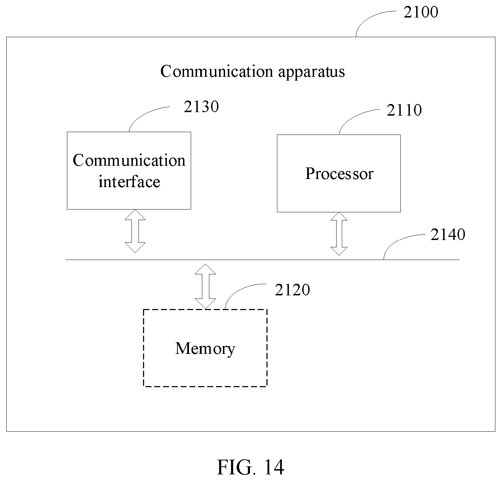

FIG. 14 shows a communication apparatus 2100 according to this application. Refer to FIG. 14. This application further provides the communication apparatus 2100.

Optionally, the communication apparatus 2100 may be a chip or a chip system. Optionally, the chip system in this application may include a chip, or may include a chip and another discrete device.

The communication apparatus 2100 may be configured to implement a function of any network element (for example, the first node, the second node, or the first terminal device) in the communication system described in the foregoing examples. The communication apparatus 2100 may include at least one processor 2110. Optionally, the processor 2110 (or a processing apparatus) is coupled to a memory. The memory may be located in the communication apparatus, the memory may be integrated with the processor, or the memory may be located outside the communication apparatus. For example, the communication apparatus 2100 may further include at least one memory 2120. The memory 2120 stores a computer program, instructions, data, and/or the like necessary for implementing any one of the foregoing embodiments. The processor 2110 may execute the computer program, the instructions, the data, and/or the like stored in the memory 2120, to complete a corresponding function of any network element in any one of the foregoing embodiments.

The communication apparatus 2100 may further include a communication interface 2130. The communication apparatus 2100 may perform information exchange with another device through the communication interface 2130. For example, the communication interface 2130 may be a transceiver, a circuit, a bus, a module, a pin, or a communication interface of another type. When the communication apparatus 2100 is a chip-type apparatus or circuit, the communication interface 2130 in the apparatus 2100 may alternatively be an input/output circuit, and may input information (also referred to as receiving information) and/or output information (also referred to as sending information). The processor may be an integrated circuit, a logic circuit, or the like. The processor may determine output information based on input information.

The coupling in this application may be an indirect coupling or a communication connection between apparatuses, units, or modules in an electrical form, a mechanical form, or another form, and is used for information exchange between the apparatuses, the units, or the modules. The processor 2110 may cooperate with the memory 2120 and the communication interface 2130. A specific connection medium between the processor 2110, the memory 2120, and the communication interface 2130 is not limited in this application.

Optionally, the processor 2110, the memory 2120, and the communication interface 2130 are connected to each other through a bus 2140. For ease of representation, only one line is for representing the bus in FIG. 14, but this does not mean that there is only one bus or only one type of bus.

In this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in this application. The general-purpose processor may be a microprocessor, any conventional processor, or the like. The steps of the methods disclosed with reference to this application may be directly implemented by a hardware processor, or may be implemented by a combination of hardware and a software module in a processor.

In this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of an instruction structure or a data structure and that can be accessed by a computer, but is not limited thereto. Alternatively, the memory in this application may be a circuit or any other apparatus that can implement a storage function, and is configured to store program instructions and/or data.

In addition, this application provides a communication apparatus, including at least one processor. The at least one processor is coupled to at least one memory, and the at least one processor is configured to execute a computer program or instructions stored in the at least one memory, so that the communication apparatus has a function of a corresponding network element (for example, the first node, the second node, or the first terminal device) in any one of the foregoing embodiments.

This application further provides a chip, including a processor and a communication interface. The communication interface is configured to receive to-be-processed information and/or data, and send the to-be-processed information and/or data to the processor, and the processor is configured to process the to-be-processed information and/or data, so that a communication apparatus in which the chip is installed has a function of a corresponding network element (for example, the first node, the second node, or the first terminal device) in any one of the foregoing embodiments.

This application further provides a computer-readable storage medium. The computer-readable storage medium stores computer instructions. When the computer instructions are run on a computer, a function of a corresponding network element (for example, the first node, the second node, or the first terminal device) in any one of the foregoing embodiments is implemented.

This application further provides a computer program product. The computer program product includes computer program code. When the computer program code is run on a computer, a function of a corresponding network element (for example, the first node, the second node, or the first terminal device) in any one of the foregoing embodiments is implemented.

This application further provides a wireless communication system, including one or more network elements in any one of the foregoing embodiments. For example, the communication system includes, for example, a first node, a second node, and a first terminal device.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

The memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). When the processor is a general-purpose processor, a DSP, an ASIC, an FPGA or another programmable logic device, a discrete gate or transistor logic device, or a discrete hardware component, the memory (a storage module) may be integrated into the processor.

All or some of the technical solutions provided in this application may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, a terminal device, an access network device, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to the computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

In this application, on the premise that there is no logic contradiction, the examples can be referenced from each other. For example, methods and/or terms in the method embodiments can be referenced from each other, functions and/or terms in the apparatus embodiments can be referenced from each other, and functions and/or terms in the apparatus examples and the method examples can be referenced from each other.

In the descriptions of embodiments of this application, "a plurality of" means two or more. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In the descriptions of embodiments of this application, unless otherwise specified, "/" indicates an "or" relationship between associated objects. For example, A/B may represent A or B. In this application, "and/or" describes only an association relationship for describing associated objects, and represents that three relationships may exist. For example, A and/or B may represent the following three cases: Only A exists, both A and B exist, and only B exists. A and B each may be in a singular or plural form.

Sequence numbers of the foregoing processes do not mean execution sequences in embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division, and may be other division during actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for providing a network service, applied to a first node, wherein the first node is a core network element or a radio access network device, and the method comprises:
receiving information about a first server-side application, wherein the first server-side application is used to provide a network service for a first terminal device, and the first server-side application is from a third-party system; and
loading the first server-side application.

2. The method according to claim 1, wherein the method further comprises:
obtaining at least one of network data and a network resource; and
executing the first server-side application based on at least one of the network data and the network resource.

3. The method according to claim 2, wherein the network data is obtained based on one or more of the following information: type information of network data needed by the first server-side application, data amount information of the network data needed by the first server-side application, information about an area in which the first server-side application provides a network service, location information of the first node, location information of the first terminal device, or identification information of the first terminal device.

4. The method according to claim 2 or 3, wherein the network resource is obtained based on one or more of the following information: type information of a network resource needed by the first server-side application, resource quantity information of the network resource needed by the first server-side application, the information about the area in which the first server-side application provides the network service, the location information of the first node, the location information of the first terminal device, or the identification information of the first terminal device.

5. The method according to any one of claims 1 to 4, wherein the first terminal device is a terminal device that establishes, with the first node, a session that is based on the first server-side application.

6. The method according to any one of claims 1 to 5, wherein the receiving the information about the first server-side application comprises:
receiving a first message, wherein the first message is used to request to load the first server-side application, and the first message comprises the information about the first server-side application.

7. The method according to claim 6, wherein the first message further comprises identification information of the first server-side application.

8. The method according to claim 6 or 7, wherein the method further comprises:
sending a second message, wherein the second message is used to notify a loading result of the first server-side application, and the second message comprises one or more of the following: identification information of the first task, identification information of the first node, or the location information of the first node.

9. The method according to any one of claims 2 to 8, wherein the obtaining the network data comprises:
sending a third message, wherein the third message is used to request the network data; and
receiving the network data responding to the third message.

10. The method according to any one of claims 1 to 9, wherein the method further comprises:
sending a fourth message, wherein the fourth message is used to request to execute the first task, and the first task is generated based on the first server-side application; and
receiving an execution result of the first task.

11. The method according to any one of claims 1 to 10, wherein the method further comprises:
sending a fifth message, wherein the fifth message is used for registration of the first node, and the fifth message comprises one or more of the following: the location information of the first node, the identification information of the first node, or capability information of the first node for providing a network service.

12. The method according to any one of claims 1 to 11, wherein the method further comprises:
sending a sixth message, wherein the sixth message indicates a capability change of the first node for providing the network service.

13. The method according to any one of claims 1 to 12, wherein the method further comprises:
receiving or sending a data packet that is associated with the first server-side application and that is from the first terminal device.

14. The method according to claim 13, wherein the data packet comprises the identification information of the first server-side application.

15. A method for providing a network service, applied to a second node, wherein the second node is configured to manage a first node, the first node is a core network element or a radio access network device, and the method comprises:
sending information about a first server-side application to the first node, wherein the first server-side application is used to provide a network service for a first terminal device, and the first server-side application is from a third-party system; and
the first node is configured to load the first server-side application.

16. The method according to claim 15, wherein the method further comprises:
receiving a seventh message, wherein the seventh message is used to request to deploy the first server-side application, and the seventh message comprises the first server-side application and requirement information of the first server-side application; and
the requirement information of the first server-side application indicates one or more of the following: type information of network data needed by the first server-side application, data amount information of the network data needed by the first server-side application, type information of a network resource needed by the first server-side application, resource quantity information needed by the first server-side application, or information about an area in which the first server-side application provides a network service.

17. The method according to claim 16, wherein the method further comprises:
determining the first node based on the seventh message.

18. The method according to any one of claims 15 to 17, wherein the sending the information about the first server-side application to the first node comprises:
sending a first message to the first node, wherein the first message is used to request to load the first server-side application, and the first message comprises the information about the first server-side application.

19. The method according to claim 18, wherein the first message further comprises identification information of the first server-side application.

20. The method according to claim 18 or 19, wherein the method further comprises:
receiving a second message, wherein the second message is used to notify a loading result of the first server-side application, and the second message comprises one or more of the following: the identification information of the first server-side application, identification information of the first node, or location information of the first node.

21. The method according to any one of claims 15 to 20, wherein the method further comprises:
receiving a fifth message, wherein the fifth message is used for registration of the first node, and the fifth message comprises one or more of the following: the location information of the first node, the identification information of the first node, or capability information of the first node for providing a network service.

22. The method according to any one of claims 15 to 21, wherein the method further comprises:
receiving a sixth message, wherein the sixth message indicates a capability change of the first node for providing the network service.

23. The method according to any one of claims 15 to 22, wherein the method further comprises:
receiving an eighth message from the first terminal device, wherein the eighth message is used to request to establish a session between the first terminal device and the first node; and
establishing the session between the first terminal device and the first node.

24. The method according to claim 23, wherein the eighth message comprises one or more of the following: the identification information of the first server-side application, the location information of the first node, or the identification information of the first node.

25. A method for providing a network service, applied to a first terminal device, wherein the method comprises:
sending an eighth message, wherein the eighth message is used to request to establish a first session between the first terminal device and a first node; and
performing, with the first node via the first session, transmission of a data packet associated with the first server-side application, wherein
the first node is a core network element or a radio access network device, the first server-side application is from a third-party system, and the first node is configured to load the first server-side application.

26. The method according to claim 25, wherein the eighth message comprises one or more of the following: identification information of the first server-side application, identification information of the first node, or location information of the first node.

27. The method according to claim 25 or 26, wherein the method further comprises:
receiving a ninth message, wherein the ninth message indicates a route selection policy rule of the first server-side application, and the ninth message comprises one or more of the following: the identification information of the first server-side application, the identification information of the first node, or the location information of the first node.

28. A communication apparatus, comprising a module or a unit configured to perform the method according to any one of claims 1 to 14, a module or a unit configured to perform the method according to any one of claims 15 to 24, or a module or a unit configured to perform the method according to any one of claims 25 to 27.

29. A communication apparatus, comprising:
a processor, wherein the processor is coupled to a memory, and the processor is configured to execute a computer program or instructions stored in the memory, so that the communication apparatus performs the method according to any one of claims 1 to 14, the communication apparatus performs the method according to any one of claims 15 to 24, or the communication apparatus performs the method according to any one of claims 25 to 27.

30. A chip, comprising a processor and a communication interface, wherein the communication interface is configured to receive to-be-processed information and/or data, and send the to-be-processed information and/or data to the processor, and the processor is configured to process the to-be-processed information and/or data, so that a communication apparatus in which the chip is installed performs the method according to any one of claims 1 to 14, performs the method according to any one of claims 15 to 24, or performs the method according to any one of claims 25 to 27.

31. A computer-readable storage medium, wherein the computer-readable storage medium stores computer instructions, and when the computer instructions are run on a computer, the method according to any one of claims 1 to 14 is implemented, the method according to any one of claims 15 to 24 is implemented, or the method according to any one of claims 25 to 27 is implemented.

32. A computer program product, wherein the computer program product comprises computer program code, and when the computer program code is run on a computer, the method according to any one of claims 1 to 14 is implemented, the method according to any one of claims 15 to 24 is implemented, or the method according to any one of claims 25 to 27 is implemented.

33. A wireless communication system, comprising a communication apparatus configured to perform the method according to any one of claims 1 to 14 and a communication apparatus configured to perform the method according to any one of claims 15 to 24.
